Europäisches Patentamt

European Patent Office

Office européen des brevets

(11) Publication number: **0 517 416 A1**

# EUROPEAN PATENT APPLICATION

(21) Application number: **92304750.0**

(22) Date of filing: **27.05.92**

(51) Int. Cl.⁵: **B29C 67/14**, B29C 67/18

(30) Priority: **01.06.91 GB 9111817**

(43) Date of publication of application:
**09.12.92 Bulletin 92/50**

(84) Designated Contracting States:
**BE DE ES FR GB IT NL SE**

(71) Applicant: **BRITISH AEROSPACE PUBLIC LIMITED COMPANY**
**Warwick House, P.O. Box 87, Farnborough Aerospace Centre**
**Farnborough, Hants. GU14 6YU(GB)**

(72) Inventor: **Scott, Fiona Nairn**
**British Aerospace Airbus Limited**
**Filton House, Bristol BS99 7AR(GB)**

(54) **Resin flow in the manufacture of fibre reinforced composite structures.**

(57) A method of enhancing resin flow during the filling of a mould (18, 19) in the manufacture of a fibre reinforced composite (13), a core (14) for use in such a mould, a composite (13) formed by the method and a mould assembly (14, 15, 16, 18, 19) are provided. At least one resin flow channel (17) is provided in a surface of the core (14) which extends substantially the length of the component (13) within the mould (18, 19) to assist resin flow along the mould and to assist lateral spread of resin from the at least one flow channel (17).

Fig.2

This invention relates to the manufacture of fibre reinforced composite structures. More particularly it relates to a resin transfer moulding method for such composite structures and the means of enhancing resin flow and filling in the component during manufacture.

Resin transfer moulding is a "closed mould process" where resin polymerisation occurs in a completely enclosed mould. It essentially involves the introduction of a liquid resin system into a pre-placed fibre reinforcement, in a closed tool. This has particular manufacturing advantages because the reinforcement can be formed to shape in what is known as a "preform" prior to resin injection. This preform may include cores and inserts, in addition to the reinforcement material. The principal manufacturing steps during resin transfer moulding are as later described.

For large components, the injection times required under available pressures may be long, since the fibre reinforcement presents a severe restriction to resin flow which increases with fibre fraction. In aerospace components, where weight is an important consideration, reasonable fibre fractions should be achieved to minimise component weight.

To assist resin injection during Resin Transfer Moulding, it is known to incorporate channels in the tool, to direct resin flow and assist component filling. This is particularly useful for long mouldings where the channel can extend from the resin injection gate to a position closely adjacent the edge of the moulding. The resin flows along this channel giving a shorter flow-path length to completely fill the moulding. In the case of large components it is important to fill the tool quickly to minimise the risk of resin gel before the component is completely filled.

One of the shortcomings of this arrangement is that a resin flow channel incorporated into the tool may not result in an adequately finished component where there is a need for a surface of high quality in terms of profile and finish, for example; aerospace aerofoil components. It is, therefore, the object of the present invention to overcome any such shortcomings.

According to one aspect of the present invention there is provided a method of manufacturing a fibre reinforced composite component, said component including at least first and second outer laminate layers of reinforcement material, said method including the steps of :-

placing said first laminate layer on, and moulding to conform to, the surface profile of a first mould tool;

placing upon said first laminate layer a core material of predetermined thickness and form in accordance with component profile requirements,

placing said second laminate layer on, and moulding to conform to, the surface profile of said core material;

positioning upon said second laminate layer a second mould tool and sealingly clamping the tools together,

injecting resin under pressure through an injection port positioned in one of said mould tools such that the resin flow permeates said first and second laminate layers by resin transfer flow and subjecting said assembly to a curing cycle,

the invention characterised by forming in the core material at least one resin flow channel to communicate with said resin injection port, the or each channel being formed in the outer surface or surfaces of the core and extending over substantially the length of the component, and directing the resin flow along the length of the or each channel to disperse laterally from said channel and permeate the fibres across the surfaces of said component.

According to a further aspect of the present invention, there is provided a fibre reinforced composite component including at least first and second outer laminate layers and an integrally moulded core material sandwiched between said outer laminate layers, said core material having at least one resin flow channel in at least one of its outer surfaces, said channel extending substantially over the length of the component.

According to another aspect of the invention there is provided a core for placement in a mould for manufacturing a fibre reinforced composite component, said core being characterised by having at least one resin flow channel formed in at least one outer surface thereof to transfer liquid resin along the mould.

According to another aspect of the invention there is provided a mould assembly for manufacturing a fibre reinforced composite component, said component including at least first and second outer laminate layers of reinforcement material and a central core, at least the said reinforcement material being permeable with resin, said mould including a resin injection port and said core being characterised by including at least one resin flow channel formed in at least one outer surface thereof, said at least one resin flow channel being in communication with said resin injection port and extending substantially over the length of the component.

Preferably, said core is of discrete, cellular foam material whereby, on dispersion, the resin flow is substantially constrained to disperse within the outer laminate layers and not into the core.

A resin flow hole may be positioned in substantial alignment with and communicating with the resin injection port and may pass through the core whereby resin is directed to part of the component on an opposite side of the core therefrom.

Air may be evacuated from the assembly prior to the injection step.

At least one said mould tool may include a surplus resin overspill channel extending peripherally around the tool.

The at least one resin flow channel may direct resin flow from the injection port to a structural attachment point for the component.

The at least one resin flow channel may be of varying cross section along its length.

The at least one resin flow channel may comprise two or more channels of varying cross sectional size with respect to one another.

One embodiment of the invention will now be described, by way of example only, and with reference to the following drawings in which :-

Figure 1 illustrates diagrammatically operations in a resin transfer moulding process -

Figure 2 is a pictorial illustration of a typical component adapted for manufacture in accordance with the present invention.

Figure 3 is a longitudinal cross section illustrating the manufacturing apparatus and method of the component taken along a line 3-3 in Figure 2.

Figures 4 and 5 are local cross sections looking along lines '4-4' and '5-5' respectively in Figure 3. Figure 6 is a pictorial illustration of a typical component resin flow channel in accordance with the invention.

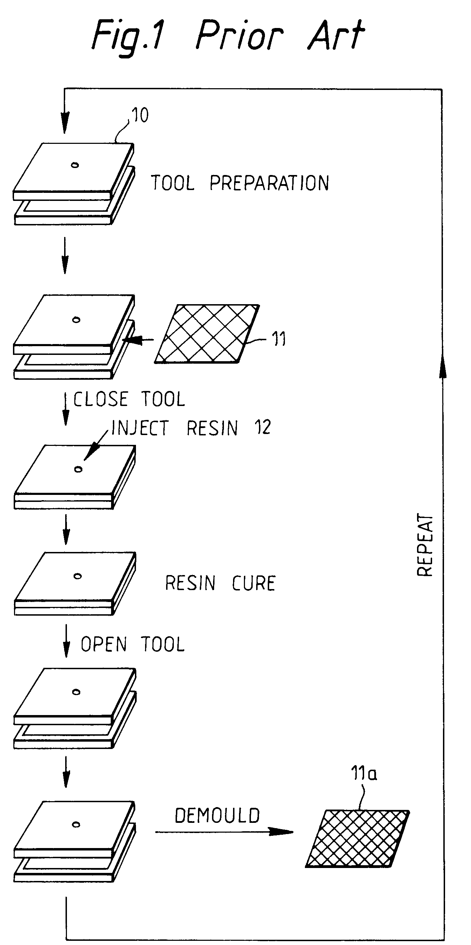

Referring to Figure 1, this illustrates diagrammatically the operations in a typical resin transfer moulding process comprising the steps of :-

1 Preparation of tool 10 prior to moulding, including application of release agent and placement of seal to prevent excessive resin flow from tool and the maintenance of vacuum on the tool if it is to be applied.

2 Fibre 11 placement, either as individual layers of reinforcement or as a preform.

3 Injection of resin 12 which can be facilitated in one of two ways:-

a) Under the influence of a positive pressure, where removal of air trapped in the preform 11 occurs by the flow of the resin from the injection gate 24.

b) Under the influence of a vacuum, where most of the air is removed from the tool 10 prior to injection, increasing the ease of injection. This reduces the final void content in the moulding.

It is possible to combine these techniques to mould at an acceptable pressure, achieving a shorter injection time, with the benefits of a vacuum in reducing the void content.

4 The resin gels or partly cures. The component 11a can be removed from the tool, facilitating post cure in an oven (where several components can be done at once) or the component can be completely cured in the tool. The choice depends upon cycle time constraints.

5. The tool is opened and the component 11a is demoulded. Once demoulded the component can undergo finishing, such as the removal of flash or machining.

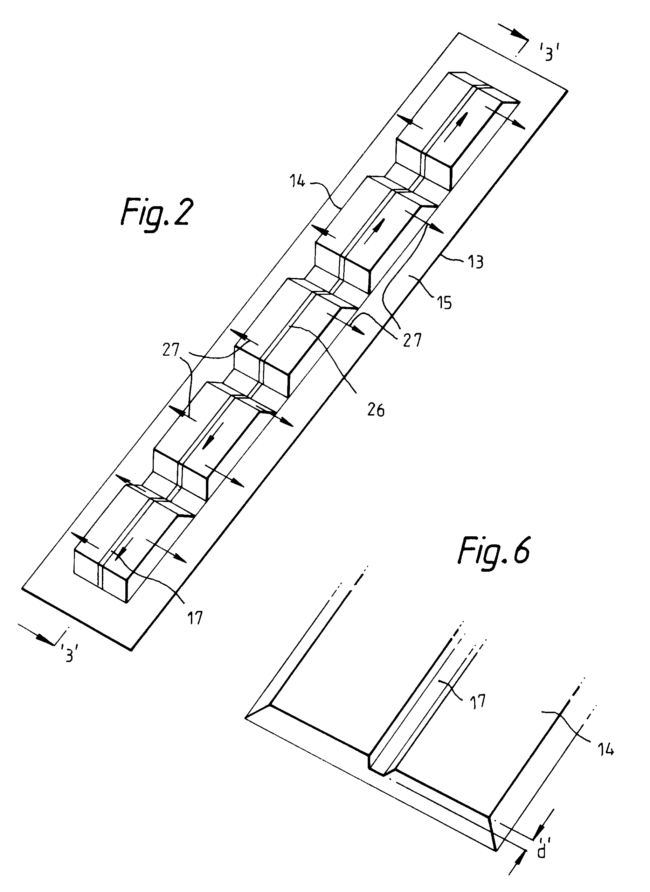

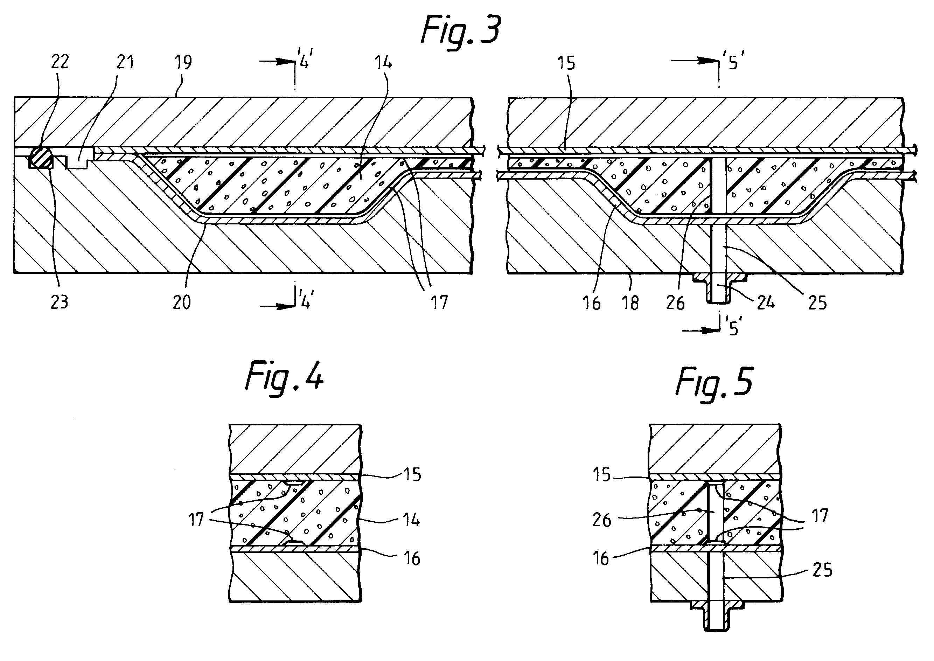

Resin flow enhancement may be achieved by incorporating into the composite assembly lay-up resin flow channels in accordance with the present invention as will now be described and by referring to Figures 2-5 inclusive.

Figure 2 partially illustrates a fibre reinforced composite component, that is the lower skin panel or laminate layer has been omitted to more clearly illustrate the core structure of the present invention.

Figures 3 to 5 inclusive, however, are associated cross sections illustrating the component assembly and the apparatus for manufacturing the component.

Referring to Figures 2-5 inclusive, the component 13 comprises a cellular foam core 14, an upper skin panel 15 and a lower skin panel 16 (omitted in Figure 2). The cellular foam core 14 extends longitudinally substantially over the component length and is corrugated to the desired structural requirements, that is it is stepped along its length in the manner illustrated and incorporates longitudinal resin flow channels 17. The configuration and size of the channels will be in conformity with requirements but in the present embodiment is substantially one millimetre (1mm) in depth 'd' and its configuration is as in Figure 6, a preferable, though not exclusive arrangement.

Referring to Figure 3, the component assembly 13 is seen in position within the mould tools, a lower mould tool 18 and an upper mould tool 19. In this embodiment the upper mould tool 19 is of flat plate whereas the lower mould tool 18, being a female tool, is of corrugated form 20 by which means the component corrugations are controlled. This lower tool 18 further includes a surplus resin overspill channel 21 and a seal 22 located within a seal retention groove 23, both the overspill channel and the seal extending peripherally around the tool. The apparatus may also include air extraction means, not shown, by which means the extraction of air in advance of the resin flow may be beneficially achieved. The lower tool 18 further incorporates a resin injection gate 24 and an injection port 25.

The reinforcement material, from which the upper and lower skin panels 15 and 16 are formed will be made up of laminated layers, as shown, by which means the desired thickness is achieved. As will be appreciated from Figure 3, the lower skin panel 16 can be formed to shape within the tool, followed by placement of the core 14 and finally the upper skin panel 15. The whole assembly is closed by the upper tool 19 and clamped to ensure proper sealing. To ensure that resin injected at the resin injection gate 24 reaches the upper skin panel area a hole 26 passes through the foam core 14 in alignment with the resin injection port 25. It should also be noted that although not illustrated here, additional reinforcements, cores and inserts may be included to particular structural or installation requirements.

The resin transfer moulding operation is as described earlier with reference to Figure 1. The significance of the present invention will now be described.

The incorporation of the longitudinal resin flow channel 17 ensures that the resin is readily transmitted from the injection gate 24 to the extreme periphery of the moulding and simultaneously induces lateral flow as indicated by arrows 27 in Figure 2.

This enhances flow symmetry and reduces the injection time which would otherwise be lengthy where the resin is required to permeate through the fibres unaided, since the reinforcement could otherwise present a severe resin flow restriction which would increase with fibre fraction. Furthermore, by containing the resin transfer flow within the component and avoiding channels in the tool, an outer surface finish is achieved without further processing.

To facilitate resin flow, equally over both skin panels 15 and 16 of the component, it is possible, by means of the hole 26, to direct resin from the injection gate 24 to the side of the component remote from the resin flow channel 17. By directing resin flow in this manner the possibility of significant resin deposits in the core cells, which would be undesirable, particularly in terms of component weight, and costly, is obviated.

Although in the present embodiment the resin flow channel 17 is only utilised at one surface of the core, this could be additionally incorporated within the core along the opposing surface, each flow channel being interconnected by the hole 26. This would further enhance and facilitate resin flow over both sides of the component, reducing injection time and injection pressures which in turn would reduce turbulence in the resin flow.

Variations in this method of manufacture may be achieved without departing from the novelty of the present invention which is to provide within the boundaries of the component under manufacture enhanced and controlled resin flow means thereby ensuring high quality reinforced composite components and structures both in terms of strength and finish.

The invention may be adapted to achieve other features. For example where structural attachment points such as bolt wells are desirable, resin flow could be directed by suitably formed and positioned channels from the injection gate to the boltwell location.

The number of channels will be dependent on the component to be manufactured. Furthermore although, in the present embodiment, channels of constant cross-sectional form are employed it may be beneficial in certain circumstances to employ channels of different sizes or ones having variable cross-sectional forms along their length.

## Claims

1. A method of manufacturing a fibre reinforced composite component (13), said component including at least first and second outer laminate layers (15,16) of reinforcement material, said method including the steps of :-

   placing said first laminate layer (15) on, and moulding to conform to, the surface profile of a first mould tool (19);

   placing upon said first laminate layer (15) a core material (14) of pre-determined thickness and form in accordance with component profile requirements,

   placing said second laminate layer (16) on, and moulding to conform to, the surface profile of said core material (14);

   positioning upon said second laminate layer (16) a second mould tool (18) and sealingly clamping the assembly (18,19) together,

   injecting resin under pressure through an injection port (24) positioned in one (18) of said mould tools such that the resin flow permeates said first and second laminate layers (15,16) by resin transfer flow and subjecting said assembly to a curing cycle,

   the invention characterised by forming in the core material (14) at least one resin flow channel (17) to communicate with said resin injection port (24), the or each channel (17) being formed in the outer surface or surfaces of the core (14) and extending over substantially the length of the component (13), and directing the resin flow along the length of the or each channel (17) to disperse laterally from said channel and permeate the fibres across the surfaces (15,16) of said component (13).

2. A method as in claim 1 including evacuating the assembly prior to the injection step.

3. A core (14) for placement in a mould (18, 19) for manufacturing a fibre reinforced composite component (13), said core (14) being characterised by having at least one resin flow channel (17) formed in a least one outer surface thereof to transfer liquid resin along the mould.

4. A core as in claim 3 in which the core material (14) is of discrete cellular foam construction.

5. A core as in claim 3 or 4 in which the at least one resin flow channel (17) is of varying cross section along its length.

6. A core as in claim 3, 4 or 5 comprising two or more resin flow channels (17) of varying cross sectional size with respect to one another.

7. A core (14) as in any of claims 3 to 6 including a resin flow hole (26) passing through the core (14) to direct resin flow from an injection port (24) in a mould tool (18) to part of the component (13) on an opposite side of the core (14) therefrom.

8. A mould assembly (14, 15, 16, 18, 19) for manufacturing a fibre reinforced composite component (13), said component including at least first and second outer laminate layers of reinforcement material and a central core according to any of claims 3 to 7, at least the said reinforcement material (15, 16) being permeable with resin, said mould (18, 19) including a resin injection port (24) and said at least one resin flow channel (17) of said core (14) being in communication with said resin injection port (24) and extending substantially over the length of the component (13).

9. A mould assembly as in claim 8 in which at least one resin flow channel (17) is positioned to direct resin flow from the injection port (24) to a structural attachment point for the component.

10. A mould assembly as in claim 8 or 9 in which at least one said tool (18) includes a resin overspill channel (21) extending peripherally around the tool.

11. A fibre reinforced composite component (13) including first and second outer laminate layers (15, 16) and integrally moulded core material (14), said core material (14) being characterised by having at least one resin flow channel (17) in at least one of its outer surfaces, the or each channel (17) extending substantially over the length of the component (13).

# Fig.1  Prior Art

TOOL PREPARATION

11

CLOSE TOOL

INJECT RESIN 12

RESIN CURE

OPEN TOOL

DEMOULD

11a

REPEAT

Fig.2

Fig.6

Fig. 3

Fig. 4

Fig. 5

EP 0 517 416 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WO-A-8 900 495 (3-D COMPOSITES)<br>* page 10, line 31 - page 11, line 29; claims; figures *<br>--- | 1-9,11 | B29C67/14<br>B29C67/18 |
| A | DE-A-2 162 174 (MÜHLAU)<br>* page 2, line 7 - line 16; claims; figure 2 *<br>--- | 1-11 | |
| A | KUNSTSTOFFE<br>vol. 75, no. 2, February 1985, MÜNCHEN<br>pages 73 - 75;<br>TENGLER: 'Erkenntnisse bei der Weiterentwicklung des Vakuum-Injektionsverfahrens zur Herstellung hochleistungsfähiger Bauteile aus CFK'<br>* page 75, column 1, line 31 - line 37; figure 1 *<br>----- | 10 | |
| | | | TECHNICAL FIELDS SEARCHED (Int. Cl.5)<br><br>B29C |

The present search report has been drawn up for all claims

| Place of search | Date of completion of the search | Examiner |
|---|---|---|
| THE HAGUE | 10 SEPTEMBER 1992 | VAN WALLENE A.M. |